Europäisches Patentamt

European Patent Office

Office européen des brevets

(11) Publication number: **0 498 224 A2**

# EUROPEAN PATENT APPLICATION

(21) Application number: **92101106.0**

(22) Date of filing: **23.01.92**

(51) Int. Cl.5: **G03G 15/04, G03B 27/52**

(30) Priority: **04.02.91 JP 35720/91**

(43) Date of publication of application:
**12.08.92 Bulletin 92/33**

(84) Designated Contracting States:
**DE FR GB IT**

(71) Applicant: **MITA INDUSTRIAL CO., LTD.**
**2-28, 1-chome, Tamatsukuri Chuo-ku**
**Osaka 540(JP)**

(72) Inventor: **Kusumoto, Hiroshi**
**84, Kusuminaka**
**Wakayama-city, Wakayama-prefecture(JP)**
Inventor: **Ishida, Hideki**
**1-29-9, Kamio-cho**
**Yao-city, Osaka(JP)**

(74) Representative: **TER MEER - MÜLLER -**
**STEINMEISTER & PARTNER**
**Mauerkircherstrasse 45**
**W-8000 München 80(DE)**

(54) **Device for reciprocally driving optical unit.**

(57) The present invention relates to a device for driving optical units for scanning a manuscript and in the going travel of the optical units (10, 14) they are driven by means of a first pulse motor (43) exhibiting the low-noise and high-torque characteristics within the revolving range in the going travel while in the returning travel of the optical units (10, 14) they are driven by means of a second pulse (45) motor exhibiting the low-noise and high-torque characteristics within the revolving range in the returning travel, whereby not only the optical units (10,14) can carry out the desired travel in both the going travel and the returning travel but also the noises generated during the travel of the optical units (10, 14) can be reduced as far as possible.

Fig.1

## BACKGROUND OF THE INVENTION

### Field of the Invention

The present invention relates to a device for reciprocally driving an optical unit used in a copying machine, a manuscript-reading apparatus and the like.

### Description of the Prior Art

In a copying machine, a manuscript-reading apparatus and the like, in which a slit exposure is carried out, an optical unit having a light source for illuminating a manuscript is reciprocally moved to scanningly illuminate said manuscript carried on a transparent manuscript-carrying plate and guide a light reflected by the manuscript to a photoreceptor, such as a sensitive member and CCD, through a lens device.

Said optical unit is accelerated from an appointed position called a home position and then travelled at a constant speed in order to scan the manuscript followed by being braked to be stopped after the completion of a scanning of the manuscript (going travel). And, the optical unit is accelerated in a direction opposite to the direction of said going travel and braked to be returned to said home position after the completion of an accelerated travel (returning travel).

It is, however, necessary for the going travel that a speed is not fluctuated within a range where the manuscript is scanned. In addition, it is necessary for the returning travel that the travel is speedily conducted in order to minimize a waiting time of an operator but one pulse motor has been used as driving means for said reciprocal movement. Said pulse motor has been regularly or reversely turned. Moreover, said constant-speed travel or said accelerated travel has been carried out.

However, in the case where the going travel and the returning travel are carried out by means of one pulse motor, as above described, a difference between the going travel and the returning travel in speed is increased and thus a noise during the going travel is increased if characteristics are set to the speedy returning travel. In addition, a disadvantage occurs in that a noise during the returning travel is increased if said characteristics are set to the going travel.

## SUMMARY Of THE INVENTION

The present invention has been achieved paying attention to the above described matters and it is an object of the present invention to provide a device for reciprocally driving an optical unit capable of not only carrying out a desired travel in both a going travel and a returning travel but also reducing a noise generated as far as possible in both said going travel and said returning travel.

In order to achieve the above described object, in a device for reciprocally driving an optical unit, in which a first optical unit and a second optical unit for scanning a manuscript are moved in the same direction at a constant speed during the going travel for scanning said manuscript so that the former may be moved at a speed 2 times that of the latter and they are moved at a speed higher than that during the going travel during the returning travel, according to the present invention, a driving system of the optical units is provided with a first pulse motor exhibiting low-noise and high-torque characteristics within a revolving range in the going travel used in the going travel of both optical units and a second pulse motor exhibiting low-noise and high-torque characteristics within a revolving range in the returning travel used in the returning travel of the optical units.

According to the above described construction, in the going travel of the optical units they are driven by means of said first pulse motor exhibiting said low-noise and high-torque characteristics within said revolving range in the going travel while in the returning travel of the optical units they are driven by means of said second pulse motor exhibiting the low-noise and high-torque characteristics within said revolving range in the returning travel. Accordingly, the optical units can stably carry out said desired travel in both the going travel and the returning travel.

And, since the first pulse motor and the second pulse motor used in both travels generate low noises within the respective revolving ranges while they give a desired high torque, a generation of noises is reduced during the desired travel and thus a quiet copying operation can be achieved in a high-speed machine.

Consequently, according to the present invention, the desired travel can be carried out in both the going travel and the returning travel and the generation of noises can be reduced in both the going travel and the returning travel, so that a copying operation and the like can be carried out without giving an uncomfortable feeling to those therearound.

## BRIEF DESCRIPTION OF THE DRAWINGS

Fig. 1 is a perspective view showing one example of a device for driving optical units according to the present invention;

Fig. 2 is a drawing showing principal parts of a copying machine provided with said device for driving optical units incorporated therein;

Fig. 3 is a graph, showing a relation among a pulse speed, a torque and a noise pressure level; and

Fig. 4 is a diagram describing an operation of pulse motors used in the present invention.

## DESCRIPTION OF THE PREFERRED EMBODIMENT

The preferred embodiment of the present invention will be described with reference to the drawings.

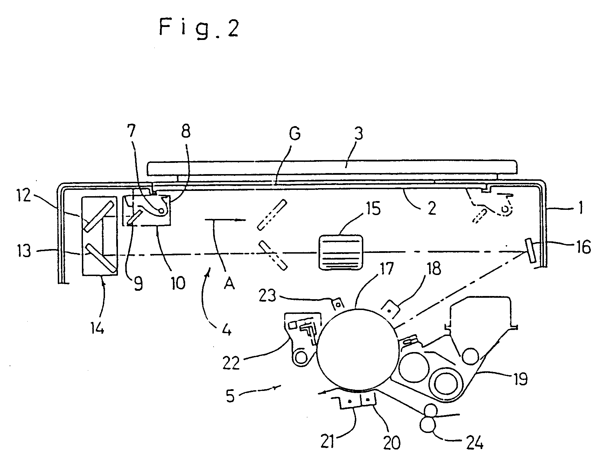

Fig. 2 roughly shows a copying machine to which the present invention is applied. Referring to Fig. 2, reference numeral 1 designates a body of copying machine, said body of copying machine 1 being provided with a transparent manuscript-carrying plate 2 and a manuscript-weight 3 thereabove, an optical system 4 in an upper portion of an inside thereof and a copying treatment portion 5 in a lower portion in said inside thereof.

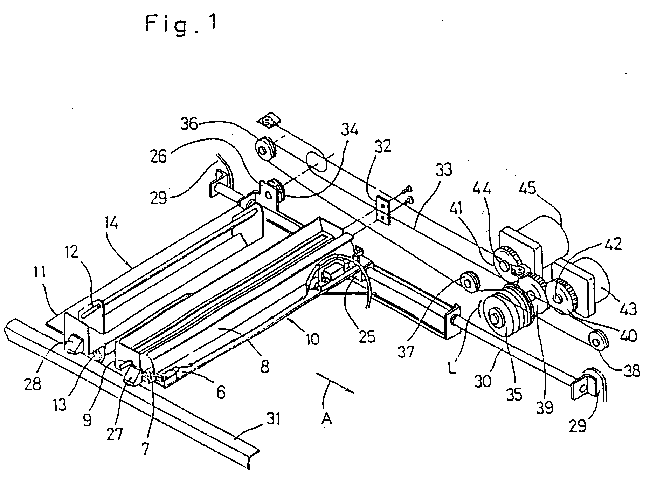

Said optical system 4, as shown also in Fig. 1, is composed of a first optical unit 10 comprising a light source 7 illuminating a lower surface of a manuscript (G) carried on said manuscript-carrying plate 2, a reflector 8 and a first mirror 9 reflecting a light reflected from a manuscript surface carried on a carriage 6, a second optical unit 14 comprising a second mirror 12 and a third mirror 13 reflecting a light reflected from said first mirror 9 carried on a carriage 11 other than said carriage 6, a lens device 15 collecting a light from said third mirror 13 and a fourth mirror 16 reflecting a light passing through said lens device 15 toward a sensitive member 17 which is a photoreceptor.

And, said manuscript (G) carried on the manuscript-carrying plate 2 can be illuminatedly scanned and a light reflected from the manuscript can be guided onto said sensitive member 17 through the mirror 9, said mirror 12, the mirror 13, said lens device 15 and said mirror 16 by travelling said first optical unit 10 at an appointed constant speed in a direction shown by an arrow (A) in Fig. 2 and at the same time travelling said second optical unit 14 at a speed 1/2 times that of the first optical unit 10 in the same direction as the first optical unit 10. In addition, the first optical unit 10 and the second optical unit 14 are adapted to be able to reciprocate between a home position (left end position shown by a full line in Fig. 2) and a maximum illuminated scanning-finishing position (right position shown by an imaginary line).

Said copying treatment portion 5 comprises a charging device 18, a developing device 19, a transfer device 20, a paper-separating device 21, a cleaning device 22 and a discharging device 23 arranged around the sensitive member 17 revolving in one direction in the order described. Said light reflected from the manuscript (G) is incident upon a surface of the sensitive member 17 uniformly charged by means of said charging device 18 to form an electrostatic latent image, said electrostatic latent image being turned into a toner image by means of said developing device 19, said toner image being transferred on papers coming from regist rollers 24 in art appointed timing by means of said transfer device 20, said papers being separated from said surface of the sensitive device 17 by means of said paper-separating device 21, remaining toners remained on the surface of the sensitive member 17 after the completion of the transfer being recovered by means of said cleaning device 22, and remaining charges being vanished by means of said discharging device 23.

A construction for reciprocatedly driving the first optical unit 10 and the second optical 14 will be below described with reference to Fig. 1. The carriage 6 of the first optical unit 10 and said carriage 11 of the second optical unit 14 is supported by means of a slide rod 30 and a slide rail 31 supported on a fitting base plate 29 through a slide metal fitting 25, 26 and a slide member 27, 28, respectively, so as to be reciprocatedly moved in the exposing travelling direction with maintaining a condition parallel to each other.

And, the carriage 6 on one side is fixedly mounted midway of a driving wire 33 by means of a fixing metal fitting 32 while the carriage 11 on the other side is mounted on said driving wire 33 through a movable pulley 34. The driving wire 33 is fixed at both ends thereof through a driving pulley 35 and a stationary pulley 36, a tension pulley 37 and a stationary pulley 38 installed on said body of copying machine 1. As to an installing order of the driving wire 33, it is wound around said driving pulley 35 through said movable pulley 34, said stationary pulley 36 and said tension pulley 37 from one end portion to be fixed at the other end portion thereof through the movable pulley 34 again from said stationary pulley 38.

The driving pulley 35 is provided so as to be rotated integrally with a gear wheel 39 and gear wheels 40, 41 are engaged with said gear wheel 39. A first pulse motor 43 is connected with said gear wheel 40 through an output shaft 42 while a second pulse motor 45 is connected with said gear wheel 41 through an output shaft 44. And, said first pulse motor 43 is used in case of a going travel in which the first optical unit 10 and the second optical unit 14 are moved in said direction shown by said arrow (A) in order to scan the manuscript while said second pulse motor 45 is used in case of a returning travel in which both optical units 10, 14 are moved in a direction opposite to the direction shown by the arrow (A).

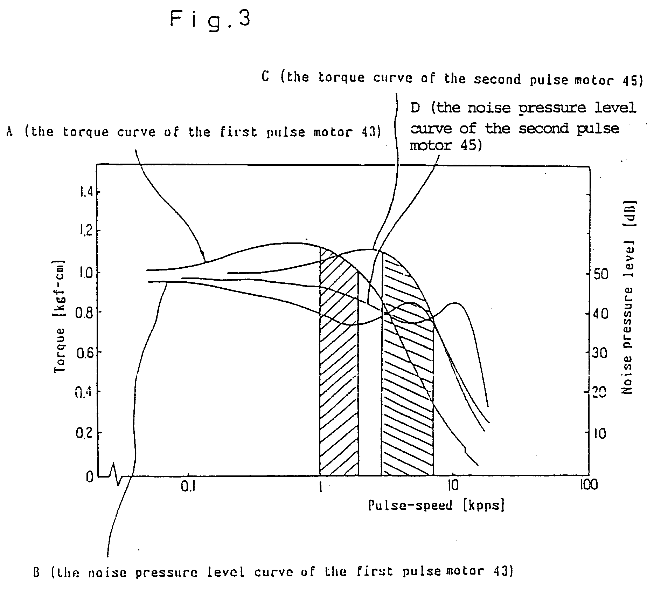

A pulse motor exhibiting low-noise and high-torque characteristics, which gives a torque of 1.0 kgf-cm or more (refer to the curve A) but generates a noise pressure level of merely 40 dB or less (refer to the curve B) within a revolving range during said going travel for scanning the manuscript, for example at a pulse-speed (revolving speed) of said output shaft 42 of 1.5 kpps, as shown in Fig. 3, is used as the first pulse motor 43. In addition, a pulse motor exhibiting low-noise and high-torque characteristics, which gives a torque of 1.0 kgf-cm or more (refer to the curve C) but generates a noise pressure level of merely 43 dB or less (refer to the curve D) within a revolving range higher than said revolving range during the going travel in speed, for example at a pulse-speed of said output shaft 44 of 4.5 kpps, as shown in Fig. 3, is used as the second pulse motor 45.

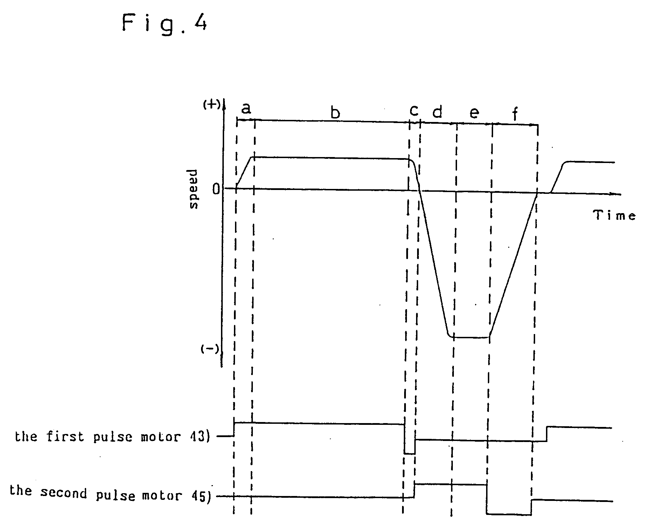

A movement of the device for reciprocatedly driving optical units having the above described construction will be described with reference to Fig. 4. Upon starting a copying operation by pushing a print key (not shown), said light source 7 is lighted and at the same time the first pulse motor 43 is driven to revolve the gear wheel 40 in the direction shown by the arrow in Fig. 1, whereby driving the gear wheel 39 and the driving pulley 35. And, as soon as the driving pulley 35 is revolved in a direction shown by an arrow (L), both optical units 10, 14 are moved in the direction shown by the arrow (A) to carry out the going travel. In this case, both optical units 10, 14 are accelerated, as shown by a range (a) in Fig. 4, in the first stage of the going travel and then travelled at a constant speed necessary for scanning the manuscript, as shown by a range (b). Subsequently, the first pulse motor 43 is braked at a position close to said manuscript scanning-finishing position, as shown by a range (c), and the light source 7 is put out to finish the going travel.

And, the first pulse motor 43 is switched off and the second pulse motor 45 is driven to revolve the gear wheel 41 in a direction opposite to said direction shown by said arrow in Fig. 1, whereby revolving the gear wheel 39 and the driving pulley 35. As soon as the driving pulley 35 is revolved in a direction opposite to said direction shown by said arrow (L), both optical units 10, 14 are moved in a direction opposite to the direction shown by the arrow (A) to carry out the returning travel. In this case, both optical units 10, 14 are accelerated, as shown by a range (d) in Fig. 4, in the first stage of the returning travel and then travelled at a constant speed faster than said travelling speed during the manuscript-scanning, as shown by a range (e). Subsequently, the second pulse motor 45 is braked at a position close to said home position, as shown by a range (f), to be returned to the home position, whereby stopping, or to carry out the going travel for the following manuscript scanning.

**Claims**

1. A device for reciprocatedly driving an optical unit, in which a first optical unit (10) and a second optical unit (14) for scanning a manuscript are moved in the same direction at a constant speed during the going travel for scanning said manuscript so that the former may be moved at a speed 2 times that of the latter and they may be moved at a speed higher than that during the going travel during the returning travel, **characterized in that** a driving system of the optical units (10, 14) is provided with a first pulse motor (43) exhibiting low-noise and high-torque characteristics within a revolving range in the going travel used in the going travel of both optical units (10, 14) and a second pulse motor (45) exhibiting low-noise and high-torque characteristics within a revolving range in the returning travel used in the returning travel of the optical units (10, 14).

2. The device as claimed in Claim 1, **characterized in that** a carriage (6) of the first optical unit (10) and a carriage (11) of the second optical unit (14) is supported by means of a slide rod (30) and a slide rail (31) supported on a fitting base plate (29) through a slide metal fitting (25, 26) and a slide member (27, 28), respectively, so as to be reciprocatedly moved in the exposing traveling direction with maintaining a condition parallel to each other.

3. The device as claimed in Claim 1 or 2 **characterized in that** a pulse motor exhibiting low-noise and high-torque characteristics, which gives a torque of 1.0 kgf-cm or more but generates a noise pressure level of merely 40 dB or less at a pulse-speed of an output shaft thereof of 1.5 kpps, is used as said first pulse motor (43) and a pulse motor exhibiting low-noise and high-torque characeristics, which gives a torque of 1.0 kgf-cm or more but generates a noise pressure level of merely 43 dB or less at a pulse-speed of an output shaft thereof of 4.5 kpps, is used as said second pulse motor (45).

Fig.1

# Fig.2

# Fig.3

C (the torque curve of the second pulse motor 45)

D (the noise pressure level curve of the second pulse motor 45)

A (the torque curve of the first pulse motor 43)

B (the noise pressure level curve of the first pulse motor 43)

Fig.4

the first pulse motor 43)

the second pulse motor 45)